# EUROPÄISCHE PATENTSCHRIFT

(11) **EP 0 449 807 B1**
(45) Veröffentlichungstag und Bekanntmachung des Hinweises auf die Patenterteilung: **23.03.1994**
(21) Anmeldenummer: 89900580.5
(22) Anmeldetag: 24.12.1988
(51) Int. Cl.: H02H 7/122, G01R 31/26

(54) **VERFAHREN ZUR KURZSCHLUSSÜBERWACHUNG EINES SPANNUNGSZWISCHENKREISUMRICHTERS**
PROCESS FOR MONITORING SHORT-CIRCUITS IN A VOLTAGE CIRCUIT INVERTER
PROCEDE DE CONTROLE DE COURTS-CIRCUITS POUR ONDULEURS A CIRCUIT INTERMEDIAIRE

(43) Veröffentlichungstag der Anmeldung: 09.10.1991
(73) Patentinhaber: SIEMENS AKTIENGESELLSCHAFT, 80333 München (DE)
(72) Erfinder: ZWANZIGER, Peter, D-8500 Nürnberg (DE); SCHUMANN, Horst, D-8557 Eggolsheim (DE)
(86) Internationale Anmeldenummer: DE8800779
(87) Internationale Veröffentlichungsnummer: WO9007813

(56) Entgegenhaltungen:
- DE-A- 3 641 441
- US-A- 4 237 531
- US-A- 4 641 231

## Beschreibung

Die Erfindung betrifft ein Verfahren zur automatischen Kurzschlußüberwachung eines Spannungszwischenkreisumrichters mittels Überwachen der Umrichterschalter auf Überlast.

Aus Thyristoren und insbesondere Schalttransistoren aufgebaute Umrichterschalter können zerstört werden, wenn in ihnen ein unzulässig hoher Strom ("Überstrom") fließt. Eine Überlastung im Normalbetrieb kann häufig mit Hilfe einer schnellen Stromregelung für die vom Stromrichter gespeiste Last beherrscht werden. Häufig müssen doch auch kurzfristige Überlastungen, die zumindest zu einer starken Verringerung der Lebensdauer führen können, an den einzelnen Ventilen überwacht werden, um die Ventile möglichst sofort abzuschalten. Dies ist z.B. erforderlich, wenn die Induktivität im Lastkreis sehr niedrig ist und der Umrichterschalter wegen hoher Stromwelligkeit mit einem hohen Effektivstrom belastet wird. Dabei kommt es zu Entsättigungserscheinungen, wobei die Kollektor-Emitter-Spannung, die normalerweise innerhalb von einigen µs auf den gesättigten Wert abfällt, infolge des Überstroms auf einem erhöhten Wert bleibt. Die Kollektor-Emitter-Spannung kurz nach dem Einschalten des Schalters kann also als Überstrom-Signal erfaßt werden, wie dies z.B. in "Elektronik 1978", Heft 3, Seite 61 - 65 beschrieben ist.

Eine weniger empfindliche, aber noch schneller auf einen Kurzschluß ansprechende Größe ist die Basis-Emitter-Spannung eines Transistors, die bei einem Überstrom ebenfalls Werte annimmt, die über den normalen Betriebswerten liegen. Für den Normalbetrieb wird daher eine Kombination mehrerer Überwachungsmethoden als optimal angesehen (siehe z.B. "Elektrotechnik" 66, Heft 8, 27. April 1984, Seite 17 - 20). Sie sind vor allem dann wirkungsvoll, wenn im Lastkreis des Stromrichters stets nennenswerte Induktivitäten liegen, die auch im Falle eines Kurzschlusses die Stromanstiegsgeschwindigkeit begrenzen können.

Eine andere Möglichkeit zur rechtzeitigen Erfassung einer gefährlichen Überlast eines Halbleiterelementes besteht darin, die Änderungsgeschwindigkeit des Stromes zu überwachen. Dazu sind nur entsprechend empfindliche Stromdetektoren erforderlich, wie sie ohnehin häufig für eine Regelung des Strom-Istwertes verwendet werden. Diese Überlast-Erfassung ist besonders für Bauelemente vorteilhaft, die nicht im Sättigungsbereich arbeiten, und ermöglicht, eine besonders steile Änderung des Stromes bereits zu erfassen, bevor sich der Überstrom selbst ausbilden kann.

Aus der DE 36 41 441 A1 ist eine Einrichtung und ein Verfahren zum Fehlertesten von steuerbaren Abschalt-Halbleitern bekannt. Bei diesem Verfahren und dieser Einrichtung wird ein Fehler in einem Gate-Abschalt-Thyristor oder einem bipolaren Transistor innerhalb des Stromkreises ermittelt, bevor eine Anoden-Kathoden- bzw. Kollektor-Emitter-Spannung angelegt wird, indem ein Gate-Impuls generiert und der resultierende Gate- bzw. Basis-Strom überwacht wird. Ein Fehler eines Gate-Abschalt-Thyristors hat nahezu immer einen Kurzschluß zwischen den Gate-Kathoden-Anschlüssen und zwischen den Anoden-Kathoden-Anschlüssen zur Folge. Bei anderen Fehlern kann der Gate-Anschluß unterbrochen werden (Leerlaufzustand). Die Basis-Emitter-Strecke einer bipolaren Vorrichtung kann in ähnlicher Weise fehlerhaft werden. Somit wird der Gate-Strom, der aus einem Gate-Impuls resultiert, abnormal groß, wenn die Gate-Kathoden- bzw. die Basis-Emitter-Anschlüsse kurzgeschlossen sind, oder der Strom ist Null für einen unterbrochenen Stromkreis oder für einen Gate-Treiberfehler. Mit diesem Verfahren bzw. dieser Einrichtung können Stromrichterventile automatisch getestet werden, bevor dem Stromrichter Netzleistung zugeführt wird. Dabei können nur die Ventile im Einzelnen getestet werden, nicht jedoch der gesamte Stromrichter.

Aus der US-PS 4 641 231 ist ebenfalls ein Verfahren und eine Einrichtung zum Fehlertesten eines steuerbaren Abschalt-Halbleiters bekannt. Mit diesem Verfahren und dieser Vorrichtung wird der Leitendzustand des Halbleiters ermittelt, wobei eine Spannungsquelle im Steuerkreis des steuerbaren Abschalt-Halbleiters verwendet wird. Dabei wird ein erstes Signal, das einer Sollhandlung des Halbleiters entspricht, mit einem zweiten Signal, das dem Zustand des Halbleiters entspricht, verglichen. Stimmen diese Signale nicht überein, liegt ein Fehler am Halbleiter vor. Außerdem ist diese Einrichtung dahingehend erweitert, daß bei zwei elektrisch in Reihe geschalteten Halbleitern, die zwischen Gleichstromschienen geschaltet sind, die Steuersignale für die Halbleiter adaptiv verriegelt werden können, damit die Gleichstromschienen nicht kurzgeschlossen werden.

Der Kurzschlußschutz ist vor allem bei Spannungszwischenkreisumrichtern wichtig, die im Betrieb auf eine praktisch konstante Zwischenkreisspannung aufgeladen werden und diese Zwischenkreisspannung über die Umrichterschalter auf die Wechselspannungsausgänge durchschalten. Durch Installationsfehler wie z.B.falsche Verkabelung der Anschlüsse, mangelhafte Isolierung der einzelnen Phasen, fehlende Sperrfähigkeit von Halbleiterschaltern kann zwischen einer Ausgangsklemme und einer anderen Ausgangsklemme oder dem Masseanschluß ein Kurzschluß bzw. Erdschluß bestehen, auf den beim betriebsmäßigen Betätigen der Umrichterschalter die Zwischenkreisspannung durchgeschaltet wird. Ähnliche Defekte, z.B. Kabelbruch des Lastanschlusses oder Fehler in der Last, können auch während des Normalbetriebs entstehen. Wird die Zwischenkreisspannung dann auf einen derartigen Kurzschluß durchgeschaltet, so reichen z.B. Schmelzsicherungen nicht aus, um die Leistungsteile vor Überlast und Folgedefekten zu schützen. Es ist daher üblich, durch Induktivitäten im Ausgangskreis des Spannungszwischenkreisumrichters die Stromanstiegsgeschwindigkeit bei einem Kurzschluß zu begrenzen und durch eine elektronische Schutzschaltung mit Überstromerkennung das entsprechende Ventil abzuschalten. Eine elektronische Summenstromüberwachung kann zusätzlich den Zwischenkreisstrom oder die Ausgangsströme erfassen, um auch bei einem Erdschluß auf der Lastseite die Ventile abzuschalten.

Trotz dieser aufwendigen Maßnahmen kann nicht immer vermieden werden, daß durch eine ungünstige Konstellation, z.B. Koinzidenz zwischen dem Kurzschlußzeitpunkt und dem vom überlagerten Steuersatz gegebenen Umschaltzeitpunkt, Leistungsteile des Umrichters geschädigt oder zumindest gefährdet werden. Eine besondere Gefahrenquelle stellen demnach ausgangsseitige Kurzschlüsse bzw. Erdschlüsse infolge der erwähnten Installationsfehler dar.

Der Erfindung liegt daher die Aufgabe zugrunde, bereits bei der Inbetriebnahme des Umrichters derartige Gefahrenquellen automatisch zu erkennen und die Anlage vor Folgedefekten eines Kurzschlusses zu schützen.

Diese Aufgabe wird erfindungsgemäß dadurch gelöst, daß vor der Aufnahme des normalen Betriebes (d.h. das betriebsmäßige Betätigen der Schalter bleibt vorerst verriegelt) zunächst die Spannung des Gleichstromkreises auf einen Wert begrenzt wird, der so weit unter der Betriebsspannung liegt, daß eine Überlast, wie sie bei einem Kurzschluß im Umrichter oder der Last auftritt, den Leistungsteil nicht gefährdet.

Diese begrenzte Spannung ist allerdings wenigstens so hoch, daß die Zünd- und Überwachungsglieder der Umrichterschalter und andere betriebswichtige Bauteile des Umrichters, die keine unabhängige Stromversorgung besitzen, sondern ihre Versorgungsspannung aus an den Umrichter angelegten Spannungen beziehen, bereits funktionstüchtig sind. Dies ist bereits der Fall, wenn die Spannung des Gleichstromkreises ungefähr 30% der normalen Betriebsspannung aufweist.

Am Umrichter liegen dann einerseits meßbare Sekundärspannungen vor, die für die Durchführung von Kurzschlußtests auf die Last gezielt durchgeschaltet werden können, bei denen andererseits aber eine Schädigung des Leistungsteils, insbesondere der empfindlichen Umrichterschalter, ausgeschlossen ist. In diesem Zustand der reduzierten Zwischenkreisspannung werden nun die Ventile nach einer vorgegebenen Abfolge von Test-Schaltzuständen angesteuert und jeweils eine bei Ansteuerung auftretende Überlast erfaßt. Hierzu genügt häufig eine Erfassung des Zwischenkreisstromes, es kann aber auch gezielt der Überstrom an den einzelnen Ventilen erfaßt werden. Ist auch nach Abschluß dieses Testes keine Überlast (und damit kein Kurzschluß im Leistungsteil) gemeldet, so wird die Begrenzung der Zwischenkreisspannung auf den niedrigen Wert aufgehoben und der Normalbetrieb freigegeben. Treten aber bei bestimmten Schalterkombinationen Überlasten auf, so werden diese ins Testprogramm zurückgemeldet und dort zu entsprechenden Fehlermeldungen für eine automatisierte Fehlerdiagnose umgesetzt.

Anhand eines Ausführungsbeispiels und zweier Figuren wird die Erfindung näher erläutert.

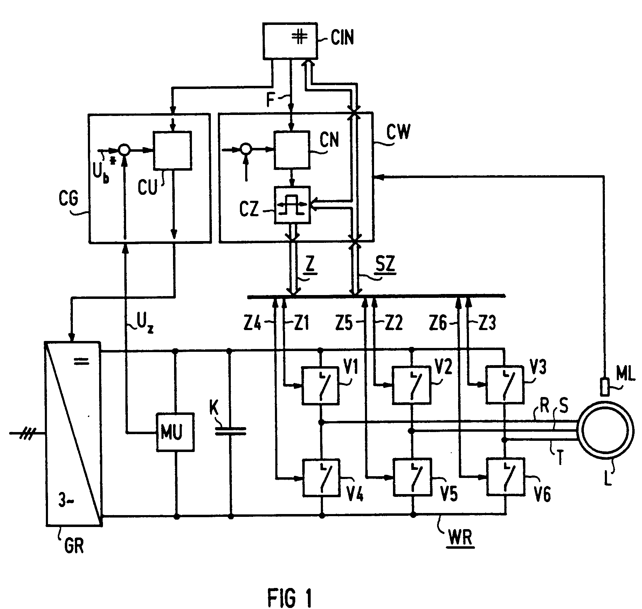

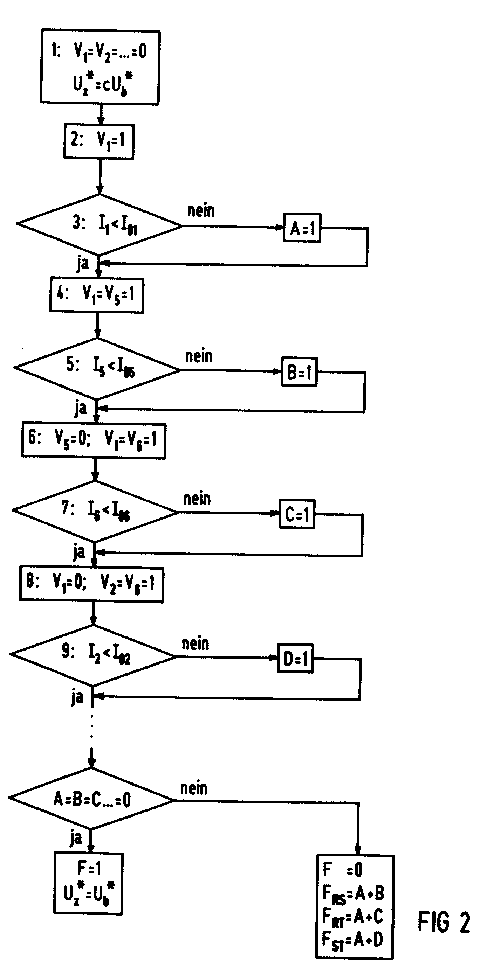

Figur 1 zeigt einen Umrichter mit Gleichspannungszwischenkreis und einer digitalen Steuereinrichtung zur Speisung einer Last, und Fig. 2 schematisch das Anfahrprogramm zur Aufnahme des Umrichterbetriebs.

In Fig. 1 besteht der Gleichspannungs-Zwischenkreisumrichter aus einem gesteuerten Gleichspannungs-Stellglied GR, dessen steuerbare Gleichspannung Uz über ein Gleichspannungsmeßglied MU gemessen und einem Zwischenkreiskondensator K zugeführt ist, der den Gleichstromeingängen einer Umrichter-Brückenschaltung WR zugeführt ist. Diese Brückenschaltung besteht jeweils aus in Reihe liegenden Umrichterschaltern V1, V4 bzw. V2, V5 bzw. V3, V6, an deren Verbindungspunkt die Umrichter-Drehstromausgänge R, S und T zum Anschluß einer Last L, z.B. einer Drehstrommaschine, verbunden sind.

Im Normalbetrieb wird das gesteuerte Gleichspannungs-Stellglied GR von dem Steuer- und Regelteil CG einer digitalen Regel- und Steuereinrichtung derart gesteuert, daß die Zwischenkreis-Gleichspannung U_{z} einen Sollwert U_{z*} annimmt, der entsprechend den Bedürfnissen der Last durch einen betriebsmäßigen Sollwert U_{b*} vorgegeben wird. Dies ist in Fig. 1 symbolisch durch einen Gleichspannungsregler CU im Steuer- und Regelteil CG dargestellt.

Soll der Last z.B. eine bestimmte Solldrehzahl für die Drehstrommaschine vorgegeben werden, so enthält der entsprechende Steuer- und Regelteil CW der Brückenschaltung WR einen Drehzahlregler CN, dem weitere, nicht dargestellte Steuer- und Regelkreise unterlagert sind, um z.B. sinusförmige oder trapezförmige Sollwerte für die Phasenspannungen an den Ausgängen R, S und T zu ermitteln, aus denen dann ein entsprechender Steuersatz CZ durch Pulsbreitenmodulation die Ansteuersignale für die Umrichterschalter V1, ... V6 bildet. Mit ML ist ein Meßglied angedeutet, daß die entsprechenden Istwerte liefert, die von den Steuer- und Regelkreisen im digitalen Steuer- und Regelteil CW benötigt werden.

Im Schaltschema der Figur 1 ist nicht näher dargestellt, daß die Umrichterschalter V1,...V6 jeweils Bauglieder enthalten, die beim Betrieb ihre Speisespannungen letztlich aus der an der Brückenschaltung CW anliegenden Gleichspannung U_{z} erhalten. Dabei handelt es sich z.B. um die Endverstärker für die Ansteuersignale und insbesondere um Überlasterfassungen, die z.B. die Schalterspannungen (z.B. Basis Emitter-Spannungen und/oder Kollektor-Emitter-Spannungen von Transistorschaltern) oder die Änderungsgeschwindigkeit des Stromes durch den Schalter überwachen und eine drohende Überlastung der Schalter melden. Die Steuerleitungen Z1,...Z6 für die Umrichterschalter übertragen also im Normalbetrieb die entsprechenden Schaltimpulse Z vom Steuersatz CZ zu den Schaltern, übermitteln aber andererseits auch die entsprechenden Quittungssignale und die Überwachungssignale SZ von den Umrichterschaltern zum Steuersatz CZ. Im Fall einer Überlast kann daher der Steuer- und Regelteil durch entsprechende Begrenzzung des betriebsmäßig vorgegebenen Laststrom-Sollwertes und durch Eingriffe in den Steuersatz CZ den Überstrom begrenzen und ggf. auch die einzelnen Schalter vorzeitig öffnen.

Die digitale Steuer- und Regeleinrichtung arbeitet programmgesteuert und wickelt bei der Betriebsetzung des Umrichters ein Anfahrprogramm ab, das durch eine entsprechende digitale Anfahrsteuerung CIN in Fig. 1 symbolisch dargestellt ist.

Das Wesen des Programms für diese Anfahrsteuerung ist schematisch in Fig. 2 dargestellt. Dabei wird in einem ersten Schritt über das Freigabesignal F die betriebsmäßige Steuerung der Brückenschaltung WR gesperrt und alle Umrichterschalter V1,...V6 sind entsprechend einem Ansteuersignal "0" geöffent. Über geeignete (in Fig. 1 nicht dargestellte) Mittel wird das gesteuerte Gleichspannungs-Stellglied GR angelassen, jedoch wird die Aufladung des Zwischenkreiskondensators K nur auf einen Sollwert U_{z*} aufgeladen, der z.B. auf ein Drittel der für den Normalbetrieb vorgesehenen Sollspannung U_{b*} beträgt. Diese Spannung reicht aus, um ein ordnungsgemäßes Arbeiten der an den Leistungsteil angeschlossenen Spannungsversorgungen und Überwachungseinrichtungen zu gewährleisten, insbesondere können also die Überlasterfassungen der Schalter V1,...V6 ggf. eine Überlast detektieren und abschalten.

Installationsfehler, die im Betrieb unter mehr oder weniger zufällig sich ergebenden Konstellationen zur Zerstörung der Schalter führen können, werden also bereits unter kontrollierten Bedingungen erkannt. Dabei hält die Begrenzung der Zwischenkreisspannung für jeden Schalter die Belastung auch bei einem Kurzschluß innerhalb der zulässigen Grenzen.

Im Programmschritt 2 der Fig. 2 wird nun über das Ansteuersignal V1 = 1 der Schalter V1 geschlossen.Der Programmschritt 3 beschreibt, daß nunmehr die Überstromerfassung des Schalters V1 ein entsprechendes Meldesignal A = 1 abgibt und in die Anfahrsteuerung CIN rückspeist, falls über den Schalter V1 ein Strom I1 fließt, der eine Überlastgrenze I₀₁ überschreitet. Ein derartiger Fall kann vorliegen, wenn z.B. der Schalter V4 durchlegiert und daher nicht sperrfähig ist, der Kondensator K sich demnach über den angesteuerten Schalter V1 und den defekten Schalter V4 entlädt. Ein kurzschlußartiges Anwachsen des Stromes tritt aber auch auf, wenn zwischen den Ausgängen R und S eine kurzschlußartige Verbindung besteht und gleichzeitig der an sich gesperrte Schalter V5 leitet. Außerdem kann A = 1 auch auftreten, wenn über den Schalter V1 ein Kurzschluß eingeschaltet wird, der über die Ausgänge R und T und den Schalter V6 gegeben ist.

Das Meldesignal A kann daher angezeigt und für eine entsprechende Fehlerdiagnose benutzt werden. Es verhindert über das entsprechende Freigabesignal F = 0 die Freigabe der betriebsmäßigen Steuerung des Umrichters, der vielmehr stillgesetzt werden kann, bis der Fehler beseitigt ist.

Im Programmschritt 4 wird durch das Ansteuersignal V5 = 1 der Schalter V5 geschlossen, während V1 geschlossen bleibt. Im Programmschritt 5 wird die Rückmeldung des Ventils 5 in die Anfahrsteuerung eingelesen und löst ein entsprechendes Meldesignal B=1 aus, falls mit Schließen von V5 ein Strom I5 durch den Schalter auftritt, der über der Lastgrenze I₀₅ liegt.

In diesem Fall besteht zwischen den Ausgängen R und S ein Kurzschluß. Durch logische Verknüpfung der Meldesignale A und B kann im Programmschritt 5 dann bei A = 0 und B = 1 eine Fehlermeldung F_{RS} vom Testprogramm ausgegeben und in ein entsprechendes Diagnoseprotokoll eingetragen werden.

Ist bisher kein Fehler detektiert (d.h. A = 0 und B = 0), so wird im Programmschritt 6 nunmehr der Schalter V5 geöffnet, während die Schalter V1 und V6 geschlossen sind. Die Stromüberwachung am Schalter 6 liefert einen Meldesignal C = 1, wenn der Strom I₆ am Schalter V6 die entsprechende Überlastgrenze I₀₆ überschreitet. Dies deutet auf einen Kurzschluß über die Ausgänge R und T hin. Für A=0 und C=1 erzeugt dann das Testprogramm automatisch eine entsprechende Fehlermeldung F_{RT} im Diagnoseprotokoll.

Andernfalls wird im Programmschritt 8 nunmehr der Schalter V1 geöffnet und der Schalter V2 zusätzlich zum Schalter V6 geschlossen. Ein Kurzschluß über die Ausgänge S und T wird durch einen Überstrom I2 am Schalter 2, ein entsprechendes Meldesignal D = 1 und eine Fehlermeldung F_{ST} detektiert.

Für den Fall, daß keiner der Schalter V4, V5 und V6 defekt ist, und daher A = 0 gilt, vermag das in Fig. 2 dargestellte Programm demnach Klemmenkurzschlüsse, die über eine falsche Verkabelung oder andere Installationsfehler an den Wechselstromausgängen R, S und T vorliegen, eindeutig zu erkennen.

Der Fachmann entnimmt den bisherigen Erläuterungen auch, wie weitere Installationsfehler erkannt werden können. Ist z.B. lediglich der Schalter V4 defekt, so treten keine weiteren Fehlermeldungen auf, wenn das in Fig. 2 für den Schalter V1 erläuterte Teilprogramm nunmehr in einem zweiten Teilprogramm, das von V2 ausgeht, und in weiteren Teilprogrammen, die von den anderen Schaltern ausgehen, wiederholt wird. Auch wenn zwei Fehler gleichzeitig vorliegen, also z.B. bei Defekten an V4 zusätzlich ein Kurzschluß zwischen S und T vorliegt, kann dies durch entsprechende Erweiterung des Programms nach Fig. 2 erfaßt werden. Es tritt nämlich dann zusätzlich zu A = 1 gemäß Schritt 3 des Programms nach Fig. 2 zunächst keine weitere Fehlermeldung auf, solange nur V2 geschlossen oder nur V3 geschlossen ist. Dagegen treten weitere Fehlermeldungen auf, wenn gleichzeitig V2 und V6 oder gleichzeitig V3 und V5 geschlossen sind.

Selbstverständlich können nach der Erfindung auch andere Testfolgen verwendet werden, wobei ggf. auch andere Fehler berücksichtigt werden können.

Die Erfindung ermöglicht somit, Fehler des Zwischenkreisumrichters oder der Last unter ungefährlichen Bedingungen zu erkennen und die Aufnahme von normalen Betriebsbedingungen, bei denen diese Fehler zu einer Zerstörung im Leistungsteil, insbesondere an den Umrichterschaltern führen müßte, zu verriegeln.

## Patentansprüche

1. Verfahren zur automatischen Kurzschlußüberwachung bei der Inbetriebnahme eines Spannungszwischenkreisumrichters, dessen Umrichterschalter jeweils mittels einer Überlasterfassung auf Überlast überwacht werden, wobei vor der Aufnahme seines Normalbetriebes folgende Schritte vorgenommen werden:
a) Die Umrichterschalter bleiben zunächst verriegelt und der Zwischenkreis wird auf eine Spannung begrenzt, die einerseits eine ausreichende Versorgungsspannung für die betriebswichtigen Teile des Umrichters sicherstellt, andererseits soweit unter der Betriebsspannung liegt, daß ein bei einem Kurzschluß im Umrichter oder der Last fließender Überstrom den Leistungsteil nicht gefährdet;
b) die Umrichterschalter werden nach einem vorgegebenen Testprogramm nacheinander einzeln und paarweise geschlossen und deren Überstrom-Rückmeldesignale werden erfaßt, und
c) die Zwischenkreisspannung wird, wenn bis zum Ende des Testprogramms kein Überstrom gemeldet ist, auf den normalen Betriebswert hochgefahren und der Normalbetrieb freigegeben, oder anderenfalls wird aus den ins Testprogramm rückgemeldeten Überströmen eine den angesteuerten Umrichterschaltern zugeordnete Fehlermeldung gebildet.

## Claims

1. A method for automatic monitoring of short-circuits when starting-up a voltage intermediate circuit convertor, the convertor switch of which is monitored for overload in each case by means of an overload detection, wherein the following steps are undertaken before taking up its normal operation:
a) the convertor switches remain locked in the first instance and the intermediate circuit is limited to a voltage which, on the one hand, ensures an adequate supply voltage for the parts of the convertor which are important for operation, and which, on the other hand, lies so far below the operating voltage that an over-current flowing in the convertor or the load when there is a short-circuit does not endanger the power circuit;
b) the convertor switches are closed in series individually and in pairs according to a predetermined test program, and the over-current check-back signals of which are picked up and
c) the intermediate circuit voltage is run up to the normal operating value and normal operation is enabled if no over-current is indicated by the end of the test program, or otherwise an error message associated with the controlled convertor switches is formed from the over-currents fed back into the test program.

## Revendications

1. Procédé de contrôle automatique de courts-circuits lors de la mise en service d'un convertisseur de tension à circuit intermédiaire, dont les interrupteurs sont chacun contrôlés en surcharge au moyen d'une détection de la surcharge, du type dans lequel, avant la reprise de son fonctionnement normal, on procède aux phases opératoires suivantes :
a) les interrupteurs du convertisseur restent tout d'abord verrouillés et la tension du circuit intermédiaire est limité à une tension qui, d'une part, assure une tension d'alimentation suffisante pour les éléments du convertisseur qui sont essentiels pour le fonctionnement, et qui, d'autre part, reste en-dessous de la valeur de la tension de fonctionnement tant qu'un courant de surcharge, qui, lors d'un court-circuit, apparait dans le convertisseur ou dans la charge, ne met pas en danger la partie puissance;
b) les interrupteurs du convertisseur sont successivement fermés individuellement et par couple, suivant un programme de test prédéterminé, et leurs signaux de signalisation en retour du courant de surcharge sont détectés, et
c) la tension du circuit intermédiaire est augmentée à la valeur normale de fonctionnement si aucun courant de surcharge n'est signalé jusqu'à la fin du programme de test, alors que, dans le cas contraire, une signalisation de défaut, associée aux interrupteurs commandés du convertisseur, est formée à partir des courants de surcharge signalés en retour dans le programme test.
